(19)

Europäisches
Patentamt
European
Patent Office
Office européen
des brevets

(11) **EP 3 103 553 A1**

(12) **EUROPEAN PATENT APPLICATION**

(43) Date of publication:
**14.12.2016 Bulletin 2016/50**

(51) Int Cl.:
**B02C 18/00** (2006.01)

(21) Application number: **16173825.7**

(22) Date of filing: **09.06.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **10.06.2015 GB 201510081**

(71) Applicant: **Butler Bullus, Anna Louise**
**Rogate, Hampshire GU31 5DB (GB)**

(72) Inventor: **Butler Bullus, Anna Louise**
**Rogate, Hampshire GU31 5DB (GB)**

(74) Representative: **Akers, Noel James**
**N.J. Akers & Co**
**63 Lemon Street**
**Truro, Cornwall TR1 2PN (GB)**

(54) **METHOD FOR PROCESSING WASTE CHEWING GUM**

(57)    A method for processing waste chewing gum to form granules, wherein the granules have a $D_{50}$ diameter is provided, the method comprising the step of granulating the waste chewing gum in a granulator, the granulator having a screen comprising a plurality of rectangular holes through which the granulated material passes, wherein the holes have a side of length x; and where the following relationship applies:

$$D_{50} = A x^2 + B x + C \qquad \text{[Formula I]}$$

in which A, B and C are constants.

FIGURE 1

**Description**

The present invention relates to a method for processing waste chewing gum, in particular to a method for processing waste chewing gum into a form which can be more easily and more readily recycled.

Waste chewing gum includes chewing gum materials and chewing gum products that have been produced but that cannot be used and sold commercially, for example because they do not meet the required specifications such as composition or appearance, they have passed their sell-by-date, they have become contaminated in some way, or they are simply surplus to requirements. In addition, waste chewing gum can include gum materials that can no longer be used in the production of chewing gum, for example because they also do not meet the required specifications such as composition or appearance, they have passed their use-by-date, they have become contaminated, or they are simply surplus to requirements.

EP 0 763 331 concerns a continuous manufacturing process for chewing gum using rework gum. EP 0 763 331 suggests that waste chewing gum can be recycled by being re-introduced into the front end of the gum manufacturing process, in particular by returning the waste gum to the kneader or gum mixer.

However, it has been found that this is not possible for all types of waste gum, for example gum materials which have aged for several days/weeks and have hardened as a result cannot be reworked by reintroducing them into the front end of the manufacturing process. Similarly, gum materials that have become contaminated, that comprise the wrong ingredients, or that have passed their use-by-date cannot be reworked in this way. In any case, in practice, chewing gum manufacturers are generally not recycling waste gum as taught in EP 0 763 331 in large quantities. Rather, chewing gum manufacturers currently prefer to dispose of their waste material. One common method for disposal is via landfill. This is evidenced by the fact that on average a single manufacturer disposes of up to 60 tonnes of waste chewing gum every month. Waste chewing gum is therefore a huge burden to chewing gum manufacturers, costing millions of pounds a year in waste management and disposal, while also causing a significant adverse impact on the environment.

Accordingly, there is a need for a technique of using waste chewing gum, that presents an alternative to disposal, in particular via landfill.

The present invention provides a method for processing waste chewing gum, such that it may be more easily and more readily recycled. In particular, the present invention provides a method for processing waste chewing gum, such that it may be more easily and more readily combined with one or more polymers to form plastic articles.

The method of the present invention relies upon reducing the size of the waste gum to be recycled, such that it may be more easily and more readily combined with one or more polymers. This is advantageous in that it enables large masses of waste gum to be processed at any one time.

Accordingly, in a first aspect, the present invention provides a method for processing waste chewing gum to form granules, wherein the granules have a $D_{50}$ diameter, the method comprising the step of:

>    granulating the waste chewing gum in a granulator, the granulator having a screen comprising a plurality of rectangular holes through which the granulated material passes, wherein the holes have a side of length x; and
>    where the following relationship applies:

$$D_{50} = A x^2 + B x + C \qquad \text{[Formula I]}$$

in which A, B and C are constants.

Any type of waste chewing gum can be processed according to the method of the present invention. As discussed above, waste chewing gum can include chewing gum materials that have been produced but cannot be used and sold commercially, as well as gum materials that can no longer be used in the production of chewing gum. These types of waste chewing gum materials can be discarded in many different forms, for example in the form of sheets, strips, tablets and/or congealed lumps/blocks of the same or different waste chewing gum materials. In addition, the waste chewing gum material can contain a coating of a sweetener and/or a flavouring, and/or comprise unwanted packaging materials.

The method of the present invention is particularly well suited to processing waste gum materials as noted above, gum materials that can no longer be used in the production of chewing gum, including for example because they have passed their use-by-date, are simply surplus to requirements, are contaminated materials or are purged materials. Waste chewing gum materials may also comprise finished product that is damaged, for example during transit or storage.

Such gum materials include gum base. Gum base is a water-insoluble material, used to carry substances such as sweeteners and flavourings and to provide the basic textural and masticatory properties of chewing gum. Gum base typically comprises as a major component one or more of a natural latex, such as chicle, or a synthetic rubber, such as isobutylene and butadiene rubbers. Additional components that may be present in the gum base include resins, waxes, plasticisers, emulsifiers, fillers and antioxidants.

The method of the present invention can be used to process different types of waste chewing gum materials at the same time, that is a mixture of different waste gum materials. Preferably however, only one type of waste chewing gum material is processed according to the method of the present invention at one time.

Waste chewing gum materials can contain impurities such as oil contaminants and purging agents. The presence of such impurities has been found to cause the waste chewing gum materials to become less manageable and more difficult to reduce in size. The presence of any contaminants may reduce the stability of the waste gum material, give rise to problems with the size reduction process and may prevent compounding of the resulting material with a polymer. Accordingly, it is preferable to employ a decontamination step, prior to processing waste chewing gum materials according to the method of the present invention, in which the impurities are removed.

The waste chewing gum materials may contain metallic contaminants. Such metallic contaminants are preferably removed before the waste gum material is subjected to size reduction in the method of the present invention. Suitable techniques for removing metallic contaminants are known in the art and include the use of magnets to remove ferromagnetic components.

As noted above, waste chewing gum may be provided in agglomerated or congealed form, for example in the form of large blocks. In such cases, the waste chewing gum is preferably broken up prior to being processed according to the method of the present invention. Suitable means for breaking up blocks of congealed waste materials are known in the art and include but are not limited to a guillotine for example hydraulically or mechanically operated.

Further, the waste chewing gum materials may comprise packaging materials. Packaging materials generally comprise paper and/or plastic materials. These may be removed using techniques known in the art, for example classification, such as air classification. The packaging materials may be removed before the size reduction. However, it has also been found to be possible to allow the packaging materials to remain in the waste gum materials during the method of size reduction and to remove the packaging materials thereafter, for example by classification.

The method of the present invention provides a method for processing waste chewing gum to form granules or pellets, particularly for compounding purposes, that is combining the waste chewing gum with a polymer. Methods for compounding are well known and usually involve mixing or blending a polymer with one or more other materials in a molten state. The materials to be blended are generally provided in pellet form as this helps to achieve a homogenous blend. For the same reason it is also advantageous if the pellets are of a uniform size. It has been found that the method of size reduction of the present invention produces a granulated or pelletized product that has a high level of particle size uniformity.

For use in compounding with a polymer, it is preferable to provide the materials to be compounded in granules or pellets of up to 25 mm in diameter, more preferably up to 20 mm, still more preferably up to 15 mm. A particle size of up 8mm in diameter, more preferably up to 6 mm, is particularly suitable for many applications. The materials may have a minimum particle size of from 0.01 mm, more preferably from 0.05 mm, still more preferably from 0.1 mm. A particle size in the range of from 0.1 to 25 mm is preferred, more preferably from 0.1 to 20 mm, still more preferably from 0.1 to 15 mm, more preferably still from 0.1 to 10 mm, with a particle size in the range of from 0.1 to 8 mm, especially 0.1 to 6 mm, being particularly preferred.

The method of the present invention can process waste chewing gum materials into granules of a suitable size for compounding. In particular, the method of the present invention can be used to produce granules having a narrow particle size distribution suitable for compounding. The particle size distribution of a sample of granules can be characterised by the $D_{50}$ diameter. The $D_{50}$ diameter defines the relative amount, by mass, of particles present according to their diameter. In particular, the $D_{50}$ diameter is the value of the particle diameter at 50% in the cumulative distribution of a sample of granulated material. For example, a $D_{50}$ diameter of 5mm means that 50% by weight of the particles in the sample are larger than 5mm, and 50% are smaller than 5mm.

The $D_{50}$ of the product of the method of the present invention may be any that is suitable for compounding the product with a polymer. The $D_{50}$ of the product may be up to 25 mm in diameter, more preferably up to 20 mm, still more preferably up to 15 mm. A $D_{50}$ of up to 10 mm, more preferably up to 8mm in diameter, still more preferably up to 6 mm, is particularly suitable for many applications. The materials may have a $D_{50}$ of from 0.5 mm, more preferably from 1 mm, still more preferably from 2 mm. A $D_{50}$ in the range of from 1 to 25 mm is preferred, more preferably from 2 to 20 mm, still more preferably from 2 to 15 mm, more preferably still from 2 to 10 mm, with a $D_{50}$ in the range of from 2 to 8 mm, especially 2 to 6 mm, being particularly preferred.

As discussed above, the method of the present invention provides the step of granulating the waste chewing gum in a granulator. Granulators are known in the art and are typically used to granulate plastic and rubber materials. Surprisingly however, it has been found that granulators can be used to granulate waste chewing gum materials. In particular, it has been found that granulators are capable of granulating waste chewing gum materials into granules of a suitable size for compounding.

As noted above, waste chewing gum can come in many different forms, for example in the form of sheets, strips, tablets and/or congealed lumps/blocks, can be coated with a sweetener and/or a flavouring agent and can comprise packaging materials. These factors complicate any method for reducing the size of the waste chewing gum materials.

In addition, waste chewing gum as a material softens at a particularly low temperature. Reducing the size of waste chewing gum using mechanical force creates heat, causing the waste chewing gum to become soft, sticky and unmanageable. In light of these factors, waste chewing gum is particularly difficult to reduce in size using standard methods and equipment. It is therefore surprising that the method of the present invention allows the wide range of waste chewing gum materials to be reduced in size sufficient to be suitable for compounding with a polymer, without undue processing problems, in particular the generation of excessive heat that would cause the gum material to become unworkable.

Granulators generally comprise a housing and a rotor capable of rotating within the said housing. The rotor comprises a series of blades which extend outwards from the rotor at an angle. Upon rotation of the rotor, the blades cut against a series of dead knives fixed to the inner surface of the housing. The granulator further comprises a removable screen for retaining the waste chewing gum inside the granulator until it has been reduced to the preferred granule size. The screen comprises a plurality of holes having a specific size and shape. In operation, only granulated material smaller than the screen holes are able to pass through the screen for further processing. Appropriate selection of the screen is important in determining the operation of the granulator.

Any type of granulator may be employed. Suitable granulators are known in the art and are commercially available. Preferably, however, the granulator is an open rotor granulator; such that air is able to more easily pass through the granulator, cooling the waste chewing gum as it is being granulated. This reduces the build up of heat during the size reduction process, thereby preventing the waste chewing gum from congealing during granulation and impeding the size reduction process. In a preferred embodiment, the granulator is a guillotine granulator, in particular a Pallmann PS 4 - 5 G3/F2 guillotine granulator. Pallmann PS 4 - 5 G3/F2 guillotine granulators are known and are commercially available.

As discussed above, the granulator used in the method of the present invention comprises a screen having a plurality of rectangular holes through which the granulated material passes. Surprisingly, it has been found that the shape of the holes in the screen of the granulator has a major effect on the operation of the granulator when processing waste chewing gum materials. In particular, it has been found that a screen having circular holes of a given diameter generates significantly more heat than a screen having rectangular holes with a side of length the same as the given diameter. This in turn prevents the waste gum material from being processed, due to the temperature increase. In contrast, it has been found that a rectangular hole produces significantly less heat and allows the waste gum material to be processed. In particular, a screen having rectangular holes allows granules of the preferred size or $D_{50}$ for compounding to be produced with a high efficiency.

The granulator used in the method of the present invention comprises screen holes having a significantly larger size than those which would be used conventionally, to form granules of the preferred size or $D_{50}$ for compounding. In general, screens are selected such that their screen holes are from 2 to 5mm larger than the preferred granule size. In the method of the present invention however, the size of the screen holes is significantly larger than the preferred granule size.

In general, in the method of the present invention, the holes in the screen have a size that is from 3 to 20 times the $D_{50}$, more preferably from 4 to 15 times.

In the method of the present invention, the holes in the screen of the granulator are rectangular in shape. The aspect ratio of the rectangle, that is the ratio of the longest side to the shortest side, is preferably from 1 to 3, more preferably from 1 to 2, still more preferably from 1 to 1.5. References herein to the 'size' of the holes in the screen is a reference to the length of a side of the rectangle, in particular the shortest side. In a particularly preferred embodiment, the holes in the screen of the granulator are square.

For granulating waste gum material to produce granules suitable for compounding with a polymer, it has been found that the desired $D_{50}$ of the granulated product in mm is related to the size x of the holes in mm in the granulator screen by the following relationship:

$$D_{50} = A\,x^2 + B\,x + C \qquad \text{[Formula I]}$$

In Formula I, the $D_{50}$ is a positive number.
In Formula I, A, B and C are constants.
In Formula I, some but not all of A, B and C may be zero.
In Formula I, when A is a non-zero number, B is zero or non-zero and C is zero or non-zero, the relationship is a polynomial.
In cases where A is zero, B is non-zero and C is zero or non-zero, the relationship is a linear relationship between the $D_{50}$ and the size x.
In the method of the present invention, it is preferred that the relationship is a polynomial relationship, that is A is not zero.

Granulating waste chewing gum materials under conditions satisfying Formula I has been found to result in a number of significant advantages. First, these conditions reduce the build up of heat, thereby improving the efficiency and operability of the size reduction process. Second, these conditions result in fewer fines and provides greater control over the size of the resulting granules, in particular producing granules having a uniform size and narrow size distribution. In addition, the granulated gum product is of a particle size distribution that requires little to no re-working, allowing the waste gum material to be granulated in a single pass through the granulator.

In Formula I, constant A may be zero or a positive number. When constant A is greater than zero, it is preferably at least 0.0005, more preferably at least 0.001, still more preferably at least 0.0015, more preferably still at least 0.002. Constant A is preferably up to 0.06, more preferably up to 0.05, still more preferably up to 0.04, more preferably still up to 0.03. The constant A is preferably in the range of from 0 to 0.05, more preferably from 0.001 to 0.03, still more preferably from 0.0015 to 0.02, more preferably still from 0.002 to 0.01, especially 0.002 to 0.005. A particularly preferred value for constant A is 0.003.

In Formula I, constant B may be a positive number or a negative number. Constant B is preferably a positive number. Constant B is preferably at least -50, still more preferably at least -40, more preferably still at least -30, for example at least -20, in particular at least -10, especially at least -5. The constant B may be up to 50, more preferably up to 40, still more preferably up to 30, more preferably still up to 20, in particular up to 10, especially up to 5. The constant B is preferably from -1 to 1, more preferably from -0.5 to 0.5, still more preferably from -0.1 to 0.1, more preferably still from -0.05 to 0.05. In one embodiment, in which the Formula I is a polynomial, that is A is not zero, constant B is preferably from -0.05 to 0.05, more preferably from -0.04 to 0.04, still more preferably from 0.01 to 0.04, more preferably still from 0.02 to 0.04, with a value of 0.032 being particularly preferred. In embodiments in which A is zero, the constant B is preferably in the range of from -1 to 1, more preferably from -0.5 to 0.5, still more preferably from -0.3 to 0.3, more preferably still from 0.1 to 0.3, with a particularly preferred value for constant B being 0.26.

In Formula I, constant C may be a positive number or a negative number or zero. In embodiments in which Formula I is a polynomial, that is A is not zero, the constant C is preferably a positive number. In embodiments in which Formula I is a linear relationship, that is A is zero, the constant C is preferably a negative number. Constant C is preferably at least -10, still more preferably at least -8, more preferably still at least -7, for example at least -6, in particular at least -5, especially at least -4. The constant C may be up to 10, more preferably up to 8, still more preferably up to 6, more preferably still up to 5, in particular up to 5, especially up to 2. The constant C is preferably from -5 to 2, more preferably from -4.5 to 1, still more preferably from -4 to 0.5, more preferably still from -3.5 to 0.1. In one embodiment, in which the Formula I is a polynomial, that is A is not zero, constant C is preferably from -1 to 1, more preferably from -0.05 to 0.5, still more preferably from 0 to 0.1, with a value of 0.072 being particularly preferred. In embodiments in which A is zero, the constant C is preferably in the range of from -5 to 0, more preferably from -4.5 to -1, still more preferably from -4 to -2, with a particularly preferred value for constant C being -3.3.

In operation of the method, the waste chewing gum to be processed according to the method of the present invention is delivered to the granulator. Any means for delivering the waste gum to the granulator may be employed. In a preferred embodiment, the waste gum is delivered to the granulator by means of a transport assembly. Suitable transport assemblies include conveyors and feeders, which are well known in the art and available commercially. In a particularly preferred embodiment, a conveyor belt, in particular an inclined conveyor belt, is used to deliver the waste chewing gum material to the inlet of the granulator.

As noted above, the method of the present invention allows the waste chewing gum to be granulated without heating the waste gum to excessively high temperatures. In general, it is not necessary to cool the waste chewing gum material. However, cooling of the waste gum materials may be required when operating in high ambient temperatures. For example, the waste chewing gum materials may be cooled in a refrigeration plant before being fed to the granulator.

As discussed above, the waste chewing gum is granulated to form granules having the preferred $D_{50}$ inside the granulator. The screen is selected to have holes based on the desired $D_{50}$ according to the relationship defined by Formula I above.

In one embodiment, the granulated material produced by the granulator is preferably further processed in a separator, to remove fine particles therefrom. This may be preferred, as the compounding of the gum granules with a polymer may be eased. Any suitable means for removing fine particles from the granulated material can be employed, although a cyclone separator is preferably employed. Cyclone separators are known in the art and are commercially available.

Alternatively, the granulated material produced by the granulator, including the fine particles, may be used directly in the compounding process and blended with one or more polymers. This simplifies the processing of the granulated product and the process equipment.

In one preferred processing scheme, air is used to entrain the granules produced by the granulator and transport the granules. The use of a separator, such as a cyclone, allows the granules to be separated from the conveying air. The finest particles and/or dust present in the product may be removed with the conveying air and separated in a later stage, for example by filtration. Suitable filter assemblies for this duty are known in the art.

The granulated product may be delivered to the separator from the outlet of the granulator using any suitable transport assembly. In a preferred embodiment, the granulated waste material is delivered to the separator by being entrained in a stream of air, as noted above, in particular generated by applying a vacuum to the system, for example induced by a fan. Any type of fan may be employed for this purpose, although a centrifugal fan is particularly preferred. The fan is preferably situated downstream of the separator, such that it does not impede the flow of air and granulated material from the granulator to the separator and acts to draw air and the entrained granules from the granulator into the separator. In addition, location of the fan downstream of the separator prevents the granules passing through the fan, in turn preventing wear and/or damage to the fan and/or a further size reduction of the granules.

In operation of the separator, granulated material is separated from the air and fine particles and collects in a region inside the separator. Granulated material can exit the separator through a closable opening or valve. In circumstances where a vacuum is employed, to transport granulated material from the granulator to the separator, a valve capable of sealing the system against the loss of air/gas, whilst also maintaining a flow of granulated material between the separator and the external environment is preferably employed. In this way, the vacuum is not disturbed by removal of granulated material collecting inside the separator and the method may be employed continuously. Any suitable valve assembly may be employed for this purpose, although a rotary valve is preferred and a rotary airlock feeder is particularly preferred.

In a particularly preferred embodiment, the air and entrained fine particles separated from the granulated material, are delivered to a filter, disposed downstream of the separator. The filter retains any fine particles and releases a clean air stream into the external environment. Any suitable type of filter may be employed for this purpose, although a reverse jet filter is preferred. Reverse jet filters are known in the art and are commercially available. In circumstances where a vacuum is employed to transport granulated material from the granulator to the separator, the fan generating the vacuum is preferably located downstream of the filter, such that the air stream is being drawn through the filter assembly.

Once the waste gum has been reduced in size according to the method of the present invention, the granules may be combined with one or more polymers to form a waste chewing gum/polymer composition using known compounding methods.

If necessary, the waste gum granules are treated to remove contaminants, in particular packaging materials, before being used in the compounding process.

Any suitable polymer may be combined with the waste chewing gum granules in the compounding process. Preferably however, the one or more polymers are selected from a polyolefin, such as polypropylene and/or polyethylene, SEBS (Styrene Ethylene Butylene Styrene), isoprene rubber, styrene-butadiene rubber, butyl rubber, polyisobutylene and mixtures thereof.

The waste chewing gum granules can be combined with the one or more polymers in a range of amounts. The ratio of waste chewing gum granules to polymer is determined by such factors as the physical and chemical properties required in the final product and the type of polymer being employed. The waste chewing gum granules may be present in an amount of up to 95% by weight, more preferably up to 90%, still more preferably up to 85%, especially up to 80%. Preferably, the final composition comprises up to 60% by weight of the waste chewing gum granules, more preferably up to 50%, still more preferably up to 40%, more preferably still up to 30%, especially up to 20%. Lower amounts of waste chewing gum granules may be used, for example from 1 to 15% by weight, such as from 1 to 10%, or more particularly from 1 to 5% by weight. The polymer may be present in an amount of up to 95% by weight, more preferably up to 90%, still more preferably up to 85%, especially up to 80%. Lower amounts of polymer may also be employed, for example up to 60% by weight, more specifically up to 50%, still more specifically up to 40%, more specifically still up to 30%, especially up to 20%. Lower amounts of polymer may be used, for example from 1 to 15% by weight, such as from 1 to 10%, or more particularly from 1 to 5% by weight.

In a particularly preferred embodiment, the waste chewing gum/polymer composition is combined with one or more plastic additives. Suitable additives for use in compounding polymers are known in the art and include, for example, fillers, such as calcium carbonate and talc, flame retardants, UV light stabilisers, slip and antiblock agents, and colouring agents such as Masterbatch. These plastic additives can be added in any relative amount to the waste chewing gum/polymer composition as required to impart the necessary properties to the final product.

Embodiments of the present invention will now be described by way of example only, having reference to the accompanying drawings, in which;

Figure 1 is a schematic representation of an apparatus for carrying out the method of the present invention;

Figure 2 is a graph of the linear relationship between the screen hole size (plotted on the x-axis) selected in each of Examples 1 to 6 and the calculated $D_{50}$ (plotted on the y-axis) for each of Examples 1 to 6; and

Figure 3 is a graph of the polynomial relationship between the screen hole size (plotted on the x-axis) selected in each of Examples 1 to 6 and the calculated $D_{50}$ (plotted on the y-axis) in each of Examples 1 to 6.

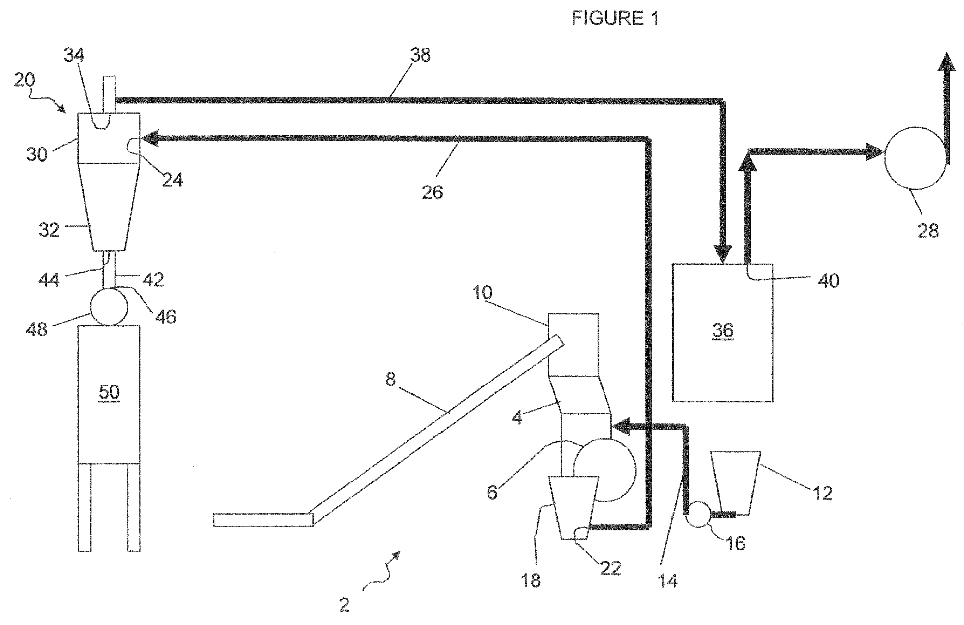

Referring to Figure 1, there is shown an apparatus, generally indicated as 2, for granulating waste chewing gum material into particles of a size distribution having a desired $D_{50}$. The apparatus 2 comprises a guillotine granulator 4. A preferred model is the Pallmann PS 4 - 5 G3/F2. The granulator 4 comprises a removable screen 6 having a plurality of square holes through which granulated material of a particular size can pass. For the sake of clarity the screen holes are not shown.

An inclined conveyor belt 8 delivers waste chewing gum to an inlet chute 10 of the granulator 4. In operation, the waste chewing gum material is emptied from a container, such as a Flexible Intermediate Bulk Container (FIBC), onto the inclined conveyor belt 8. For the sake of clarity the FIBC is not shown in Figure 1.

As shown, anti-caking agent is added to the granulator, as required, via an addition system comprising a feed hopper 12 and an addition duct 14. The anti-caking agent is caused to travel from the feed hopper 12 to the granulator 4, through the addition duct 14 entrained in a stream of air produced by a centrifugal fan 16.

In operation, granulated material passes through the screen 6 into a granulator outlet 18. Granulated material is conveyed from the granulator outlet 18 entrained in a stream of air to a cyclone separator of conventional configuration, generally indicated as 20, to separate granulated material from the conveying air and entrained fine particles. The granulator outlet 18 has an outlet connection 22 communicating with a duct 26. Air and granulated material are conveyed from the outlet connection 22 of the granulator outlet 18 to a tangential inlet 24 of the cyclone separator 20 in a stream of air under negative pressure generated by a centrifugal fan 28.

As shown, the cyclone separator 20 is formed from a generally cylindrical upper portion 30 and an inverted frusto-conical lower portion 32. The generally cylindrical upper portion 30 comprises the tangential inlet 24, through which the granulated material is delivered to the cyclone separator 20. The generally cylindrical upper portion further comprises an outlet 34, through which the air and entrained dust particles are discharged. The air and entrained dust particles are delivered to a reverse jet filter 36 via an outlet duct 38. Clean air is then discharged via outlet 40 of the reverse jet filter 36 and through the centrifugal fan 28. Air and entrained dust particles are drawn from the cyclone separator 20 to the reverse jet filter 36 and clean air is drawn from the reverse jet filter 36 to outlet 40 under the action of the vacuum generated by the centrifugal fan 28.

The cyclone separator 20 is of conventional design, operating to separate the required granulated waste gum material from the conveying air stream and entrained dust.

The granulated waste gum material separated in the cyclone passes through an opening 44 in the base of the cyclone separator 20 under gravity and collects in a cylindrical discharge spool 42. As shown, the discharge spool 42 shares an opening 44 with the cyclone separator 20 and comprises a further opening 46. The opening 44 is always open and allows granulated material to pass from the cyclone separator 20 into the discharge spool 42. However, granulated material may only pass through the opening 46 into a collection vessel 50 via a rotary valve 48. During operation, the rotary valve 48 maintains an air tight seal within the apparatus 2 to maintain the vacuum generated by the centrifugal fan 28 and thus maintain the flow of the granulated products.

In the embodiment shown, the rotary valve 48 comprises a fixed housing with first and second openings, the first opening opposing the opening 46 of the discharge spool 42 and the second opening opposing collection vessel 50. During operation a rotary drum continuously rotates within the fixed housing and transports granulated material between the first and second openings. The rotary drum comprises a plurality of depressions or pockets for capturing granulated material falling through the opening 46 under gravity. As the drum rotates, granulated material present within the depressions or pockets is transported from the first opening to the second opening and discharged into the collection vessel 50 under gravity. The rotary drum is of a size and shape which ensures an air tight seal between the rotary drum and the fixed housing. In this way, the vacuum generated by the centrifugal fan 28 is maintained during operation of the apparatus 2. This type of rotary valve is of a standard design and for the sake of clarity; the features of this embodiment are not shown.

The method of the present invention is further illustrated by the following specific Examples.

EXAMPLES

Example 1

The apparatus shown in Figure 1 was used to continually process 5 tonnes of waste chewing gum material according to the method of the present invention.

The ambient temperature in the factory, where the apparatus was installed, was 11.1 degrees Celsius. Accordingly, there was no need for cooling the waste chewing gum prior to processing.

The Pallmann PS 4 - 5 G3/F2 guillotine granulator was fitted with a screen having a plurality of 60mm by 60mm square holes. The speed of rotation of the rotor was kept constant at 320 revolutions per minute, providing a throughput of 500kg to 800kg of waste chewing gum per hour.

Anti-caking agent was added to the waste chewing gum material present inside the granulator to prevent the formation of lumps of congealed granulated material. Anti-caking agent was added at a rate of approximately 5 to 10% by weight of the waste chewing gum material, depending upon how much was already present in the material pre-granulation.

Examples 2 to 6

Example 1 was repeated, varying the operating parameters and starting material, as summarised in Table 1 below. References to screen size and hole size are to the length of the sides of the square holes in mm.

TABLE 1

| Example | Screen Hole Size | Starting Material |
| --- | --- | --- |
| 1 | 60mm by 60mm | Gum base |
| 2 | 50mm by 50mm | Gum base |
| 3 | 30mm by 30mm | Gum base |
| 4 | 25mm by 25mm | Gum base |
| 5 | 18mm by 18mm | Gum base |
| 6 | 15mm by 15mm | Gum base |

The granulated material obtained from each of Examples 1 to 6 was sieved to determine the particle size distribution, the results of which are shown in Table 2 below:

TABLE 2

| Example | Screen Hole Size (mm$^2$) | Percentage of particles | | | | |
| --- | --- | --- | --- | --- | --- | --- |
| | | <100$\mu$ (anti-caking agent) | >100$\mu$ and <2.5mm | >2.5mm and <6mm | >6mm and <10mm | >10mm |
| 1 | 60 | 10 | 0 | 4.5 | 18 | 67.5 |
| 2 | 50 | 10 | 9 | 19.8 | 20.7 | 40.5 |
| 3 | 30 | 13 | 30 | 24 | 18 | 15 |
| 4 | 25 | 5 | 56 | 26 | 8 | 5 |
| 5 | 18 | 10 | 70 | 18 | 2 | 0 |
| 6 | 15 | 10 | 80 | 9 | 1 | 0 |

As discussed above, for compounding purposes, the method of the present invention is preferably used to granulate the waste chewing gum material into particles smaller than 10mm in diameter. From the results set out in Table 2, it can be seen that a screen size of from 15 to 25 mm produced a product having minimal granules greater than 10 mm in diameter.

For compounding purposes particles between 100$\mu$ and 6mm are particularly suitable. Particles present in the product and smaller than 100$\mu$ in diameter derive from the powdered anti-caking agent present in the process.

The $D_{50}$ was calculated for the product of each of Examples 1 to 6 using the data in Table 2. Particles smaller than 100$\mu$ (anti-caking agent) were ignored for the purposes of estimating the $D_{50}$, as the particles of anti-caking agent can be considered to pass straight through the granulator with no change in particle size. The $D_{50}$ for Examples 1 to 6 are summarised in Table 3 below:

TABLE 3

| Screen Hole Size | Calculated $D_{50}$ |
| --- | --- |
| 60 | 13 |

(continued)

| Screen Hole Size | Calculated $D_{50}$ |
|---|---|
| 50 | 9.1 |
| 30 | 4.5 |
| 25 | 2 |
| 18 | 1.6 |
| 15 | 1.4 |

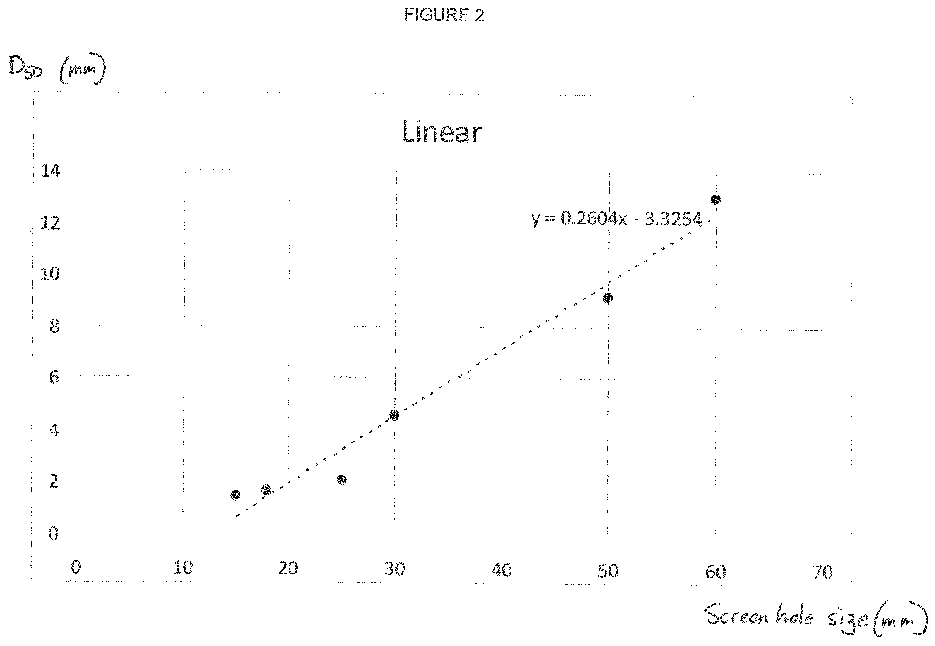

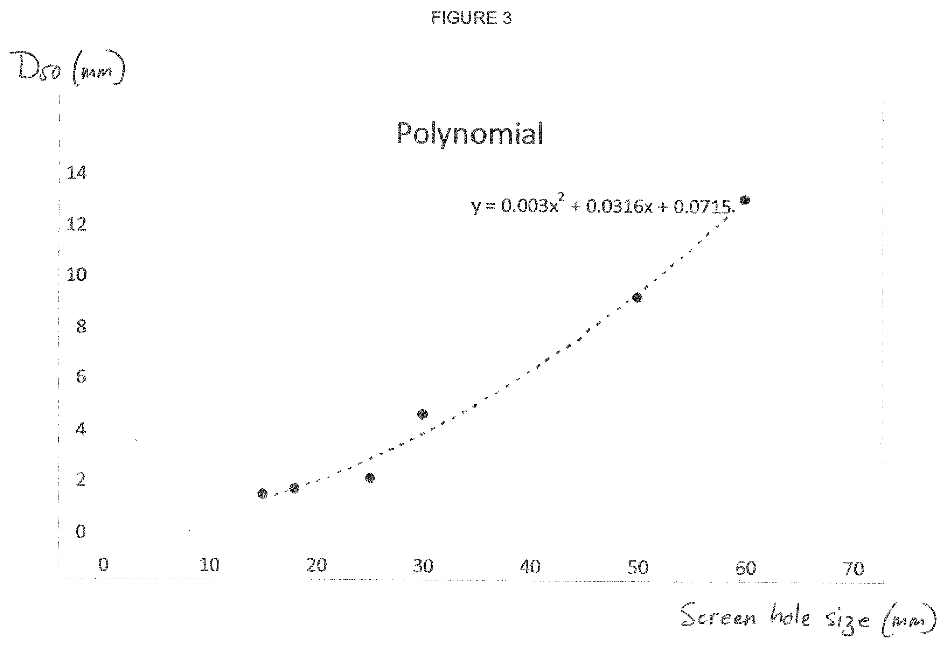

The relationship between the screen hole size and the $D_{50}$ can be determined from plotting the data of Table 3, as shown in Figures 2 and 3.

The data of Table 3 can be represented by Formula I:

$$D_{50} = A(\text{screen size})^2 + B\,(\text{screen size}) + C \qquad (I)$$

Figure 2 shows the data of Table 3 plotted with the best straight line indicated, that is with A = 0 in Formula I. Figure 3 shows the data of Table 3 plotted with the best polynomial line indicated.

For the best fit linear relationship indicated in Figure 2, the best fit line is represented by the following formula:

$$D_{50} = 0.26(\text{Screen Size}) - 3.3$$

This formula represents a good basis for operating the method of the present invention for granulating the waste chewing gum starting material, in particular to determine the $D_{50}$ for a granulated product produced from a given screen size. The screen size required to produce granules of a given $D_{50}$ may be determined using the following formula derived from the above linear relationship:

$$\text{Screen Size} = 3.85\,D_{50} + 12.7$$

For the best fit polynomial relationship indicated in Figure 3, the best fit line is represented by the following formula:

$$D_{50} = 0.003(\text{Screen Size})^2 + 0.032(\text{Screen Size}) + 0.07$$

This formula represents a very good basis for operating the method of the present invention for determining the screen size from the desired $D_{50}$ of the granulated product.

Using the linear and polynomial lines of best fit, the $D_{50}$ for each of Examples 1 to 6 was calculated; the results of which may be found in Table 4 below:

TABLE 4:

| Screen Hole Size | $D_{50}$ (Linear) | $D_{50}$ (Polynomial) |
|---|---|---|
| 60 | 12.3 | 12.79 |
| 50 | 9.7 | 9.17 |
| 30 | 4.5 | 3.73 |
| 25 | 3.2 | 2.75 |
| 18 | 1.38 | 1.62 |
| 15 | 0.6 | 1.23 |

By comparing the calculated $D_{50}$ values of Table 3 with the polynomial and linear $D_{50}$ values of Table 4, it can be seen that Formula I can be used to accurately relate the $D_{50}$ of the waste gum particles with the appropriate screen hole size.

Example 7

200 kg of the waste chewing gum granules produced in Example 4 were compounded with polypropylene granules and a range of additives in the amounts listed in Table 5 below:

TABLE 5

| Component | Amount (Kg) |
|---|---|
| Masterbatch | 30 |
| UV stabilizer | 30 |
| Calcium Carbonate | 100 |
| Waste Chewing Gum granules | 200 |
| Polypropylene (Homo 12mi Generic) | 640 |

The product was a blend comprising waste chewing gum and polypropylene having excellent physical properties.

**Claims**

1. A method for processing waste chewing gum to form granules, wherein the granules have a $D_{50}$ diameter, the method comprising the step of:

   granulating the waste chewing gum in a granulator, the granulator having a screen comprising a plurality of rectangular holes through which the granulated material passes, wherein the holes have a side of length x; and where the following relationship applies:

$$D_{50} = A x^2 + B x + C \qquad \text{[Formula I]}$$

   in which A, B and C are constants.

2. The method according to claim 1, wherein the granules have a diameter of up to 25 mm, preferably wherein the granules have a diameter of up to 20 mm, more preferably wherein the granules have a diameter of up to 15 mm, still more preferably wherein the granules have a diameter of up to 10 mm.

3. The method according to any preceding claim, wherein the granules have a diameter of greater than 0.05 mm, preferably wherein the granules have a diameter of greater than 0.1 mm.

4. The method according to any preceding claim, wherein the $D_{50}$ is up to 20 mm, preferably wherein the $D_{50}$ is up to 15 mm, more preferably wherein the $D_{50}$ is up to 10 mm, still more preferably wherein the $D_{50}$ is up to 8 mm, more preferably still wherein the $D_{50}$ is up to 6 mm.

5. The method according to any preceding claim, wherein the granulator is an open rotor granulator, preferably wherein the granulator is a guillotine granulator.

6. The method according to any preceding claim, wherein the holes in the screen have a side length that is from 3 to 20 times the $D_{50}$ of the granules being produced, preferably wherein the holes in the screen have a side length that is from 4 to 15 times the $D_{50}$ of the granules being produced.

7. The method according to any preceding claim, wherein the aspect ratio of the holes is from 1 to 3, preferably wherein the aspect ratio of the holes is from 1 to 2, more preferably wherein the aspect ratio of the holes is from 1 to 1.5, more preferably still wherein the holes are square.

8. The method according to any preceding claim, wherein A is a positive number, preferably wherein A is at least 0.0005, more preferably wherein A is at least 0.001, still more preferably wherein A is at least 0.002.

9. The method according to claim 8, wherein A is up to 0.06, preferably wherein A is up to 0.04, more preferably wherein A is up to 0.03, still more preferably wherein A is in the range of from 0.001 to 0.03, more preferably still wherein A is from 0.002 to 0.01.

10. The method according to any preceding claim, wherein B is up to 50, preferably wherein B is up to 20, more preferably wherein B is up to 5, more preferably still wherein B is from -1 to 1, still more preferably wherein B is from -0.5 to 0.5.

11. The method according to claim 10, wherein A is not zero and B is from -0.05 to 0.05 or wherein A is zero and B is from -0.3 to 0.3.

12. The method according to any preceding claim, wherein C is up to 10, preferably wherein C is up to 8, more preferably wherein C is up to 6, still more preferably wherein C is up to 2; especially wherein C is greater than -10, preferably wherein C is greater than -5, more preferably wherein C is greater than -4.

13. The method according to claim 12, wherein A is not zero and C is from -0.05 to 0.05, or wherein A is zero and C is from -4.5 to -1.

14. The method according to any preceding claim, wherein the granules are subjected to a separation process to remove fine particles, preferably wherein the fine particles are removed in a cyclone separator.

15. The method according to any preceding claim, further comprising compounding the granules with one or more polymers, preferably wherein the one or more polymers are selected from a polyolefin, SEBS, isoprene rubber, styrene-butadiene rubber, butyl rubber and polyisobutylene.

FIGURE 1

EP 3 103 553 A1

FIGURE 2

Linear

$y = 0.2604x - 3.3254$

Screen hole size (mm)

$D_{50}$ (mm)

FIGURE 3

Polynomial

$y = 0.003x^2 + 0.0316x + 0.0715.$

D50 (mm)

Screen hole size (mm)

EP 3 103 553 A1

Europäisches
Patentamt

European
Patent Office

Office européen
des brevets

# EUROPEAN SEARCH REPORT

Application Number

EP 16 17 3825

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Anonymous: "Ultra-Granulator, Type PS-CEconomical size reduction of natural and synthetic rubber of any kind", ALLMANN Industries, Inc. , 19 March 2011 (2011-03-19), XP002761675, Retrieved from the Internet: URL:http://www.pallmannindustries.com/Spanish/ps-c_pallmann_ultra_granulator_-_knife_mill.htm [retrieved on 2016-09-09] * the whole document * | 1-15 | INV. B02C18/00 |
| A | DK 2004 01196 A (GUMLINK AS [DK]) 6 August 2004 (2004-08-06) * abstract * | 1-15 | |

TECHNICAL FIELDS
SEARCHED   (IPC)

B02C

The present search report has been drawn up for all claims

| Place of search | Date of completion of the search | Examiner |
|---|---|---|
| The Hague | 9 September 2016 | Gilliquet, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**EP 3 103 553 A1**

## ANNEX TO THE EUROPEAN SEARCH REPORT
## ON EUROPEAN PATENT APPLICATION NO.

EP 16 17 3825

This annex lists the patent family members relating to the patent documents cited in the above-mentioned European search report.
The members are as contained in the European Patent Office EDP file on
The European Patent Office is in no way liable for these particulars which are merely given for the purpose of information.

09-09-2016

| Patent document cited in search report | Publication date | Patent family member(s) | Publication date |
|---|---|---|---|
| DK 200401196 A | 06-08-2004 | ----------------------------------- | |

For more details about this annex : see Official Journal of the European Patent Office, No. 12/82

**EP 3 103 553 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0763331 A